# EUROPÄISCHE PATENTSCHRIFT

(11) **EP 1 985 144 B1**
(45) Veröffentlichungstag und Bekanntmachung des Hinweises auf die Patenterteilung: **30.06.2010**
(21) Anmeldenummer: 07703391.8
(22) Anmeldetag: 12.02.2007
(51) Int. Cl.: H04W 28/24

(54) **VERFAHREN ZUR GEWÄHRLEISTUNG VON DIENSTGÜTE IN PAKETVERMITTELNDEN MOBILFUNKNETZEN**
METHOD FOR GUARANTEEING THE QUALITY OF SERVICES IN PACKET-SWITCHING RADIO COMMUNICATIONS NETWORKS
PROCÉDÉ DE GARANTIE DE QUALITÉS DE SERVICES DANS LES RÉSEAUX DE RADIOCOMMUNICATION MOBILE À COMMUTATION PAR PAQUETS

(30) Priorität: 14.02.2006 DE 102006006953
(43) Veröffentlichungstag der Anmeldung: 29.10.2008
(73) Patentinhaber: T-Mobile International AG, 53227 Bonn (DE)
(72) Erfinder: KLATT, Axel, 50996 Köln (DE); KOPPENBORG, Stefan, 46242 Bottrop (DE); NENNER, Karl-Heinz, 53332 Bornheim (DE)
(74) Vertreter: Riebling, Peter
(86) Internationale Anmeldenummer: PCT/EP2007/001154
(87) Internationale Veröffentlichungsnummer: WO 2007/093335

(56) Entgegenhaltungen:
- WO-A-00/13436
- WO-A-99/51055
- "3rd Generation Partnership Project; Technical Specification Group Services and System Aspects; End-to-end Quality of Service (QoS) concept and architecture (Release 6)" 3GPP TS 23.207 V6.6.0 (2005-09), TECHNICAL SPECIFICATION, 5. Oktober 2005 (2005-10-05), Seiten 1-53, XP002433848

## Beschreibung

Die Erfindung betrifft ein Verfahren zur Gewährleistung von Dienstgüte in paketvermittelnden Mobilfunknetzen, und beinhaltet insbesondere ein alternatives Verfahren zu dem in heutigen digitalen Mobilfunknetzen der 2. und 3. Generation (GSM/UMTS) angewandten Dienstgüte-Konzept.

Gegenwärtig bekannte Lösung (Stand der Technik):

Ein Endgerät (User Equipment (UE)) befindet sich in einer Funkzelle eines paketvermittelnden Mobilfunknetzes und ist - nach erfolgreicher Registrierung im Netz - für zu übertragende Daten erreichbar. Um die Datenübertragung tatsächlich zu starten, ist der Aufbau einer paketorientierten Verbindung zu einer im Kernnetz (Core Network, "CN") des Mobilfunknetzes befindlichen Datenübertragungseinrichtung erforderlich. Hierzu signalisiert das UE eine Anforderung für einen Verbindungsaufbau an das Netzwerk und gibt hierbei auch die für die Verbindung gewünschte Dienstgüte an. Hierbei handelt es sich:
- explizit um ein Dienstgüteprofil, welches in Form eines Parametersatzes, der technische Eigenschaften des Paketflusses (z.B. Datendurchsatz, Verzögerung bei der Übertragung, Priorisierung) auf der Verbindung beschreibt; oder
- implizit um die Angabe eines im Netz (z.B. per Teilnehmerprofil) gespeicherten Grundprofils, welches ebenfalls in Form des o.g. Parametersatzes vorliegt.

Der Verbindungsaufbauwunsch wird über das Funkzugangsnetz (Radio Access Network, "RAN") an das Kernnetz CN weitergeleitet, wo zunächst eine Überprüfung hinsichtlich der Zulässigkeit der angeforderten Dienstgüte bzw. die Auswahl des Grundprofils mit Hilfe von Parametern des Teilnehmerprofils erfolgt. Nachdem der Verbindungsaufbauwunsch mit anhand des Teilnehmerprofils ggf. angepasster Dienstgüte an die Datenübertragungseinrichtung weitergeleitet wurde, erfolgt dort eine erneute Überprüfung und ggf. Reduktion der Dienstgüte, wobei interne Kriterien und optional auch zusätzliche externe Kriterien, die aus weiterer Signalisierung der Datenübertragungseinrichtung mit externen Entscheidungs- oder Diensteknoten gewonnen werden, berücksichtigt werden. Ist die Dienstgüte schließlich festgelegt, wird eine Bestätigung des Verbindungsaufbauwunsches über die beteiligten Knoten des Kern- und Funknetzes an die anfordernde UE zurückgesandt. Es erfolgt weitere Signalisierung im RAN, um den benötigten Funkkanal zur UE aufzubauen. Hierbei ist eine erneute Reduzierung der Dienstgüte durch das RAN (z.B. mangels Ressourcen) möglich, so dass erneute Signalisierung darüber zur Datenübertragungseinrichtung erfolgt. Wird schließlich der Verbindungsaufbau von allen beteiligten Knoten akzeptiert, kann mit der Datenübertragung vom und zum UE begonnen werden, wobei sowohl sequentiell als auch gleichzeitig mehrere und unterschiedliche Dienste über diese Verbindung abgewickelt werden können. Alle in die Datenübertragung eingebundenen Knoten müssen den Datenstrom entsprechend des durch die technischen Übertragungsparameter spezifizierten Dienstgüteprofils behandeln.

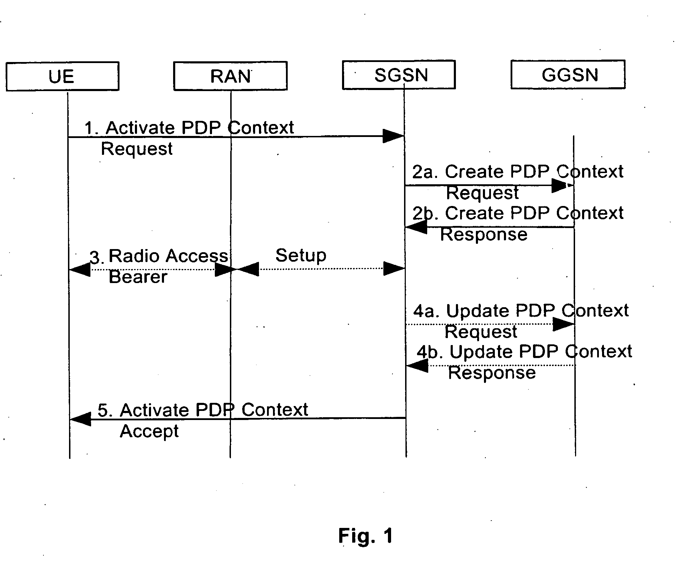

Ein Beispiel für den Einsatz dieses Verfahrens ist das Funknetz der 3. Generation "UMTS", wobei im Kernnetz die Netzknoten SGSN (Serving GPRS Support Node) und GGSN (Gateway GPRS Support Node) beteiligt sind und im RAN die Knoten RNC (Radio Network Controller) und NodeB (Basisstation). Die oben beschriebene Prozedur ist in Figur 1 am Beispiel von UMTS skizziert.

Die oben angesprochenen externen Entscheidungs-/Diensteknoten sind in Figur 1 nicht dargestellt.

Im Unterschied zum heutigen UMTS-Standard, bei dem die Nutzdaten durch sämtliche dargestellten Knoten fließen, wird derzeit eine Optimierung dergestalt angestrebt, dass der SGSN nur noch in die Signalisierung, nicht jedoch in die Nutzdatenübertragung involviert ist.

Die wesentlichen Nachteile des dargestellten Ansatzes - Stand der Technik - sind:
a) Die Vereinbarung der Dienstgüte erfolgt pro Verbindung ("Bearer"-bezogen) anstatt, wie eigentlich nötig, pro "Service Flow" (Dienste bezogen).
b) Auch für diesen "Bearer" (Träger) gibt es kein gemeinsames Verständnis im CN und RAN bzgl. der Dienstgüte-Eigenschaften, da CN und RAN isoliert agieren.
c) Bei der Aushandlung des Dienstgüteprofils müssen viele technische Parameter verhandelt werden, die entweder generell für den gewünschten Dienst oder für die jeweils an der Aushandlung beteiligten Knoten nicht sinnvoll bzw. bedeutungslos sind.
d) Die Signalisierung zwischen den betroffenen Knoten ist - u.a. aufgrund des in Punkt c) dargestellten Sachverhalts - sehr aufwändig.
e) Obwohl das UE im Netz registriert ist, muss zur Aufnahme der Datenkommunikation immer noch zusätzlich signalisiert werden.
f) Üblicherweise sind die in Figur 1 dargestellten Komponenten des CN mit einem auf dem Internet-Protokoll (IP) basierenden Transportnetz (Backbone) miteinander verbunden. Ein Abgleich der Dienstgüte des im Mobilfunknetz eingerichteten Bearers mit den Transportnetzknoten ist aber nicht möglich.
g) Eine spätere Änderung der Dienstgüte einer bereits bestehenden Verbindung - z.B. bei der Nutzung anderer Anwendungen/Dienste seitens des UE - erfordert prinzipiell die gleiche Signalisierung wie oben beschrieben.
h) Zur Differenzierung der Dienstgüte bei paralleler Nutzung hinsichtlich der Dienstgüte zu unterscheidender Dienste ist der Aufbau weiterer Verbindungen notwendig (s.a. Punkt a). Die dazu notwendige Signalisierung ist vom Ablauf und Aufwand vergleichbar zu der oben dargestellten.

Die Dokumente WO 00/13436 A2 und WO 99/51055 A2 sowie die Spezifikation des 3^{rd} Generation Partnership Project, 3GPP TS 23.207 V6.6.0 (2005-09); Technical Specification Group Services and System Aspects; Endto-End Quality of Service (Qos) concept and architecture (Release 6), beschreiben den Stand der Technik. WO 00/13436 A2 beschreibt ein Verfahren zum Zuweisen unterscheidlicher Dienstgüte (Qality of Service) in einem Funknetzwerk. Ein zentraler QoS Manager ist für die Zuweisung des QoS zuständig. WO 99/51055 A2 beschreibt ein Verfahren zur Unterstützung der Dienstgüte in einem paketorientierten Funknetz. Die Spezifikation 3GPP TS 23.207 beschreibt die technischen Grundlagen.

Es ist die Aufgabe der Erfindung, ein Verfahren zur Gewährleistung von Dienstgüte in paketvermittelnden Mobilfunknetzen anzugeben, das sämtliche o.g. Nachteile vermeidet und sowohl in den heutigen als auch zukünftigen Mobilfunknetzen anwendbar ist.

Diese Aufgabe wird erfindungsgemäß durch ein Verfahren mit den Merkmalen des Anspruchs 1 gelöst.

Bevorzugte Ausgestaltungen der Erfindung sind in den abhängigen Patentansprüchen beschrieben.

Es wird davon ausgegangen, das als Paketvermittlungstechnik - wie auch im obigen Beispiel UMTS - das Internet-Protokoll IP eingesetzt wird. Weiterhin gilt für das Mobilfunknetz die grundsätzliche Unterscheidung zwischen einem Funknetzanteil RAN und einem Kernnetzanteil CN.

Der Vorschlag beseitigt Verfahrensmängel im heutigen Konzept, die ein Erreichen der für die angebotenen Telekommunikationsdienste benötigten Dienstgüte erschweren bzw. verhindern. Aufgrund der im Vorschlag enthaltenen Vereinfachungen ist der Umfang der zur Gewährleistung der Dienstgüte benötigten Verarbeitungsschritte und -resourcen wesentlich geringer. Weiterhin wird durch Minimierung der erforderlichen Signalisierung ein schnellerer Verbindungsaufbau und eine höhere Effektivität im Netzwerk erreicht.
Figur 1 zeigt den Ablauf für einen Verbindungsaufbau nach dem Stand der Technik.
Figur 2 zeigt den Ablauf für einen Verbindungsaufbau gemäß der Erfindung.

Der Ausgangszustand ist zunächst identisch zu dem der bekannten Lösung. Ein Endgerät (User Equipment (UE)) befindet sich in einer Zelle und ist - nach erfolgreicher Registrierung im Netz - für zu übertragende Daten erreichbar. Unmittelbar nach der Registrierung oder zu einem späteren Zeitpunkt wird dann eine Verbindung zur Datenübertragung hergestellt, einschließlich der dafür anzuwendenden Dienstgüte. Dies kann unter Einsatz des hier beschriebenen Verfahrens geschehen oder aber im Rahmen anderer (vorher stattfindender) Signalisierung zwischen UE und Netz, wodurch eine gesonderte Signalisierung (s. Punkt e) in den Nachteilen der heute praktizierten Lösung) für den Verbindungsaufbau entfällt. Beispielsweise kann der Verbindungsaufbau im Rahmen der Registrierung des UE am Netz erfolgen, oder während der Konfiguration des UE für das IP-Protokoll. Allenfalls wird durch das hier beschriebene Verfahren der Umfang der Dienstgütesignalisierung wesentlich reduziert.

Entsprechend der Teilung des Netzes in einen RAN- und einen Kernnetzteil kann eine Verbindung unterteilt werden in eine Funkverbindung und eine Kernnetzverbindung. Die Funkverbindung wird vom RAN verwaltet und ist charakterisiert durch folgende Parameter:
- einen "Radio Flow Identifier" RFI,
- eine Transportklassenkennung ("Transport Class Label" TCL),
- eine durch den TCL-Wert vorgegebene, funknetzspezifische Beschreibung der Parameter der Funkverbindung, mittels derer das RAN die Funkverbindung hinsichtlich der Gewährung der Dienstgüte steuert.

Die Kernnetzverbindung wird im wesentlichen vom CN verwaltet und ist charakterisiert durch nachfolgende Parameter:
- einen "CN Flow Identifier" CFI,
- eine Transportklassenkennung TCL,
- eine durch den TCL-Wert vorgegebene, kernnetzspezifische Beschreibung der Parameter der Kernnetzverbindung, mittels derer das CN die Kernnetzverbindung hinsichtlich der Gewährung der Dienstgüte steuert.

Die Kenntnis der drei obenstehenden Parameter ist nur jeweils im RAN bzw. CN erforderlich, während der TCL-Wert sowohl im RAN als auch im CN bekannt sind. Für die Funktionsweise des Verfahrens ist es aber unerheblich, ob auch die o.g. Identifier/Kennungen im RAN und CN bekannt oder gar identisch sind oder nicht. RFI und CFI können so gestaltet werden, dass sie nur gemeinsam mit der Identität des UE eindeutig sind.

Je nach Ausprägung des Systems können die jeweils funk- bzw. kernnetzspezifischen Parameter indirekt aus dem TCL abgeleitet werden, oder teilweise oder vollständig explizit im TCL angegeben sein. Im Falle einer vollständigen oder teilweisen Ableitung der spezifischen Parameter erfolgt die Herleitung aufgrund von konfigurierbaren knotenspezifischen Regeln. Ein wesentliches Merkmal des Verfahrens besteht darin, dass RAN und CN unabhängig voneinander und ohne entsprechende Signalisierung spezifische Parameter der von ihnen verwalteten RAN-/CN-Verbindung ändern können, solange dies in den Grenzen des vorgegebenen TCLs und der damit ggf. verbundenen Ableitungsregeln erlaubt ist.

Jede Verbindung ist weiterhin gekennzeichnet durch einen Paketfilter, der die Eigenschaften der IP-Steuerinformation (IP Header) für die Verbindung bestimmt, so dass nur Pakete, die diesem Paketfilter entsprechen, auf dieser Verbindung an das UE weitergereicht werden. Insbesondere kann hierbei die Regel "alle Pakete für dieses UE" für eine Verbindung gelten. Die Einrichtung / Änderungen dieses Paketfilters für neue / laufende Verbindungen können zwischen UE und CN vereinbart werden oder anderweitig vom CN ermittelt werden, z.B. anhand des Teilnehmerprofils. Die dafür erforderlichen Prozeduren sind aber nicht Bestandteil dieses Dienstgüteverfahrens.

### A) Übertragung über eine bestehende Verbindung mit gleichbleibender Dienstgüte

Pakete, die über diese Verbindung zum UE ("downlink") übertragen werden (nachdem sie vom CN mit Hilfe des Paketfilters der Verbindung zugeordnet wurden), werden mit den für die Verbindung gültigen CFI und TCL gekennzeichnet. Der CFI wird vom RAN genutzt, um das Paket über die entsprechend eingerichtete RAN-Verbindung weiterzuleiten, d.h. das RAN bildet den CFI auf den RFI ab. Das TCL gibt an, dass das Paket mit der für die Verbindung eingerichteten Dienstgüte über die Luftschnittstelle weitergeleitet werden soll, wobei die Übertragung des TCL selbst über die Luftschnittstelle nicht erforderlich ist.

Pakete, die über diese Verbindung vom UE ("uplink") übertragen werden (nachdem sie vom UE mit Hilfe interner Mittel der Verbindung zugeordnet wurden), werden vom UE mit dem dieser Verbindung zugewiesenen RFI gekennzeichnet. Der RFI wird vom RAN genutzt, um das Paket über die entsprechend eingerichtete CN-Verbindung weiterzuleiten, d.h. das RAN bildet den RFI auf den CFI ab. Weiterhin wird das für diese Verbindung gültige TCL hinzugefügt, welches angibt, dass das Paket mit der für die Verbindung eingerichteten Dienstgüte über das Kernnetz weitergeleitet werden soll.

Eine Variante des o.g. Verfahrens ist das intermittierende oder vollständige Weglassen des TCL, da dieses sich bei gleich bleibender Dienstgüte gegenüber den vorhergehenden Paketen nicht geändert hat.

Pakete, die über diese Verbindung zum und vom UE gesendet/empfangen werden, können vorher auf der RAN- oder CN-Verbindung oder durchgehend vom CN zum UE verschlüsselt werden. Verschlüsselung vom UE zum externen Ziel ist ebenfalls möglich. Ferner sind Optimierungen des Transportvolumens wie etwa IP Header Compression möglich.

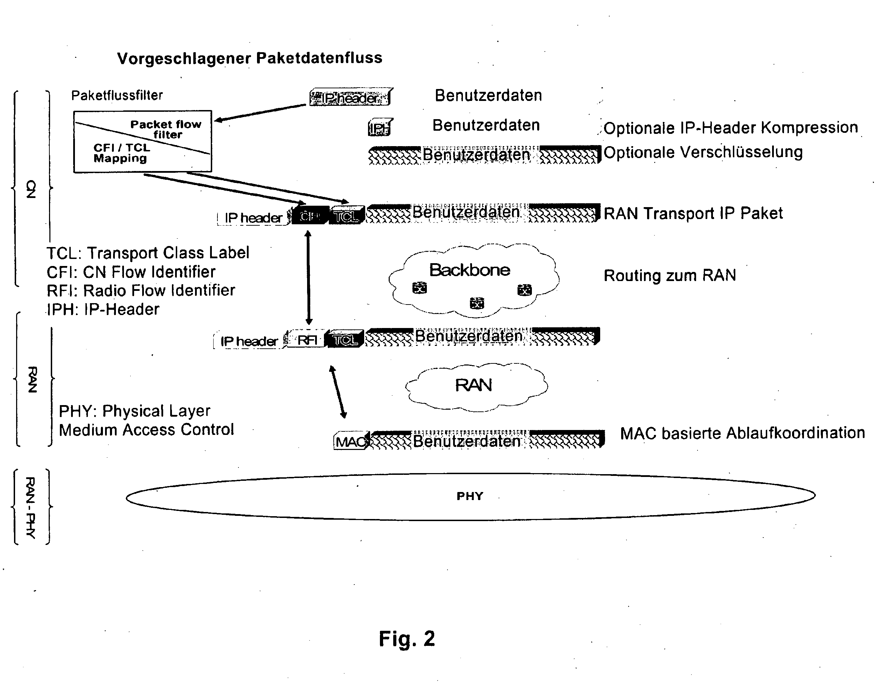

Figur 2 zeigt schematisch den oben beschriebenen Ablauf der Datenübertragung über die bestehende Verbindung.

### B) übertragung über eine bestehende Verbindung mit Veränderung der Dienstgüte

Bei einer bestehenden Verbindung wird festgestellt, dass die vereinbarte Dienstgüte für den über die Verbindung abgewickelten Dienst / Zweck nicht angemessen (zu hoch/zu niedrig) ist, oder dass früher zugewiesene /angeforderte Ressourcen nicht mehr / wieder verfügbar sind. Die Änderung der Dienstgüte der Verbindung wird dann von demjenigen Knoten (UE, RAN, CN) veranlasst, der den o.g. Grund für die Änderung feststellt.

### B1) vom UE veranlasste Dienstgüteänderung

Das UE stellt fest, dass es die vorher vereinbarte Dienstgüte nicht mehr benötigt, oder aber dass ein Dienst mit höherer Dienstgüte ablaufen soll. Dementsprechend fordert es eine entsprechende Senkung oder Erhöhung der Dienstgüte an. Dabei ist der Ablauf wie folgt.
1. UE fordert vom RAN eine Veränderung der funkverbindungsspezifischen Parameter der Verbindung in einer Weise, dass dies mit dem bestehenden TCL nicht vereinbar ist. Zur Übermittlung dieser Anforderung ist u.U. der vorherige Aufbau einer Funksignalisierungsverbindung erforderlich.
2. RAN ermittelt das zu der Änderung der Funkverbindung passende TCL.
3. RAN sendet die (Uplink-)Pakete dieser Verbindung, markiert mit dem neuen TCL, an das CN. Sofern das Weglassen des TCL, wie unter A) beschrieben, eingesetzt wird, ist mindestens ein Paket mit dem geänderten TCL zu senden. Zur Sicherheit, dass der neue TCL beim CN empfangen wird, können auch mehrere Pakete hintereinander oder in gewissen Abständen mit dem neuen TCL beaufschlagt werden. Sollten zu diesem Zeitpunkt keine Nutzerdaten vorliegen, können alternativ auf der Verbindung leere Pakete, mit dem neuen TCL markiert, gesendet werden.
4. Im CN werden die für den neuen TCL benötigten kernnetzspezifischen Verbindungsparameter ermittelt.
5. Es wird die Verfügbarkeit der benötigten Ressourcen geprüft:
   a) bei positivem Ergebnis der o.g. Prüfung wird der neue TCL der (durch den CFI gekennzeichneten) Verbindung zugewiesen;
   b) anderenfalls wird die Dienstgüte anhand der tatsächlich verfügbaren Ressourcen reduziert und ein dieser Dienstgüte entsprechender TCL der Verbindung zugewiesen (das kann der "alte" TCL sein!).
      Diese Prüfung kann entfallen, wenn die Dienstgüte gesenkt werden soll.
6. Sofern im CN ein neuer TCL zugewiesen wurde, kann optional die Zulässigkeit des neuen TCL für die Verbindung zum UE anhand von anderweitigen Informationen, z.B. dem Teilnehmerprofil, überprüft werden. Hierzu können im Bedarfsfall externe Entscheidungs- oder Diensteknoten einbezogen werden.
   Dieser Schritt kann entfallen, wenn die Dienstgüte gesenkt werden soll.
7. Das CN beaufschlagt nun die Downlink-Pakete dieser Verbindung mit dem oben ermittelten TCL. Sofern die in A) beschriebene Technik des Weglassens des TCL eingesetzt wird, ist mindestens ein Paket mit dem geänderten TCL zu senden. Zur Sicherheit, dass der neue TCL beim RAN empfangen wird, können auch mehrere Pakete hintereinander oder in gewissen Abständen mit dem neuen TCL beaufschlagt werden. Sollten zu diesem Zeitpunkt keine Nutzerdaten vorliegen, können alternativ auf der Verbindung leere Pakete, mit dem neuen TCL markiert, gesendet werden.
8. Die Parameter der Funkverbindung werden entsprechend dem in Schritt 7 vorgegebenen tatsächlichen TCL, soweit notwendig bzw. noch nicht geschehen, angepasst:
   a) falls RAN und UE noch keine Änderung der Funkverbindung vorgenommen haben (s. Schritt 1), wird dies jetzt entsprechend dem tatsächlichen TCL durchgeführt,
   b) bereits durchgeführte Änderungen der Funkverbindung werden, falls notwendig, entsprechend dem tatsächlichen TCL angepasst.

Die obige Darstellung des Ablaufs impliziert nicht notwendigerweise eine zeitliche Reihenfolge.

### B2) vom RAN veranlasste Dienstgüteänderung

Diese Änderung erfolgt z.B., wenn im RAN nicht mehr ausreichende Ressourcen zur Aufrecherhaltung der vereinbarten Verbindungsdienstgüte verfügbar sind, oder aber nach vorheriger Nutzung entzogene Ressourcen wieder verfügbar werden. Dementsprechend veranlasst das RAN eine Senkung oder Erhöhung der Dienstgüte. Hierbei ist der Ablauf mit dem unter B1 beschriebenen identisch bis auf die Ausnahme, dass die Änderung der Funkverbindung im Schritt 1 hier nicht wie in B1 vom UE sondern vom RAN ausgeht.

Die Darstellung des Ablaufs impliziert nicht notwendigerweise eine zeitliche Reihenfolge.

### B3) vom CN veranlasste Dienstgüteänderung

Diese Änderung erfolgt z.B., wenn im CN nicht mehr ausreichende Ressourcen zur Aufrecherhaltung der vereinbarten Verbindungsdienstgüte verfügbar sind, oder aber nach vorheriger Nutzung entzogene Ressourcen wieder verfügbar werden. Sie kann auch dadurch veranlasst werden, dass das CN feststellt, dass die vorher vereinbarte Dienstgüte nicht mehr benötigt wird, oder aber dass ein Dienst mit höherer Dienstgüte als bisher ablaufen soll. Ebenfalls ist eine Veranlassung der Änderung der bestehenden Verbindung durch Kommunikation des CN mit externen Entscheidungs- oder Diensteknoten möglich.

Dementsprechend veranlasst das CN eine Senkung oder Erhöhung der Dienstgüte. Hierbei ist der Ablauf mit dem unter B1 beschriebenen prinzipiell identisch bis auf Tatsache, dass die einzelnen Schritte in entsprechend umgekehrter Reihenfolge, ausgehend vom CN, ablaufen. Dementsprechend ist es möglich, dass im RAN die angeforderten Ressourcen nicht verfügbar sind - insofern kann das RAN einen anderen als den vom CN. angegebenen TCL im Uplink zurücksenden.

Die Darstellung des Ablaufs impliziert nicht notwendigerweise eine zeitliche Reihenfolge.

### C) Einrichten von Verbindungen mit Festlegung der Dienstgüte

Ein UE oder ein UPE stellt den Bedarf fest, eine (neue) Verbindung mit gegebener Dienstgüte aufzubauen. Dies kann bei der ersten Verbindung z.B. im Zuge der Registrierung am Netz oder anderer Signalisierung erfolgen, wie anfangs dargestellt - also mit einer von unserem Vorschlag unabhängigen Prozedur.

### C1) Aufbau der ersten Verbindung durch das UE

Alternativ kann das UE gesondert die Einrichtung einer Verbindung veranlassen, damit Kommunikation überhaupt ermöglicht wird. Das UE hat dann bei der Registrierung die notwendigen Authentifizierungs-, Identifikations- und Kommunikationsparameter erhalten. Der Ablauf zum Verbindungsaufbau ist dann wie folgt.
1. Das UE fordert vom RAN, in Anlehnung an das unter B1, Punkt 1 beschriebene Verhalten, Ressourcen für eine Funknetzverbindung an. Zur Übermittlung dieser Anforderung ist u.U. der vorherige Aufbau einer Funksignalisierungsverbindung erforderlich.
2. UE und RAN vereinbaren, wie bereits unter B dargestellt, die funkverbindungsspezifischen Parameter der Verbindung, im Einklang mit im RAN festgelegten Richtlinien für den Aufbau neuer Verbindungen. RAN ermittelt das zu dieser Funkverbindung passende TCL und legt einen RFI für die Verbindung fest.
3. RAN sendet ein oder mehrere Uplink-Paket(e) an das CN, markiert mit dem neuen TCL und
   a) einem speziellen CFI, den das CN als Anfrage nach einer neuen Verbindung interpretiert,
   b) den bei der Registrierung zugewiesenen UE-Identifikationsparametern im erforderlichen Umfang.
   a) und b) könne auch kombiniert werden, z.B. wenn, wie bereits anfänglich beschrieben, der CFI durch die UE-Identität eindeutig gemacht wird. In diesem Fall ist damit bereits ein gültiger CFI für die Verbindung festgelegt.
4. Das CN generiert den für die neue Verbindung zu nutzenden CFI oder nutzt den bereits eindeutigen CFI und legt, wie unter B beschrieben, das tatsächliche TCL fest. Dabei senkt es ggf. das vom RAN angeforderte TCL ab (z.B. aufgrund von Ressourcenengpässen, lokalen Richtlinien oder aufgrund von Einschränkungen im Teilnehmerprofil).
5. Das CN schickt ein oder mehrere Downlinkpakete mit dem festgelegten TCL, dem für die Verbindung gültigen CFI und, soweit getrennt erforderlich, den UE-Identifikationsparametern, an das RAN.
6. Soweit erforderlich, erfolgt noch eine Anpassung der Funkverbindung zwischen RAN und UE. Die Verbindung ist damit hergestellt.
7. Entweder im Verein mit den obigen Schritten oder mit einer separaten Prozedur erfolgt die Konfiguration des UE mit den benötigten IP-Parametern (z.B. IP-Adresse).
8. Entweder im Verein mit den obigen Schritten oder mit einer separaten Prozedur erfolgt die Bekanntmachung und Authentifikation des UE im CN bzw. deren Überprüfung. Dabei kann auch, wie unter B beschrieben, eine Überprüfung auf Zulässigkeit des TCL mittels Teilnehmerdaten stattfinden.
9. Die in Schritt 7 und 8 genannten separaten Prozeduren sind nicht Bestandteil des hier dargestellten Dienstgüteverfahrens.
10. Der für diese erste Verbindung gültige Paketfilter kann implizit als "alle Pakete" eingerichtet werden. Wird ein anderer Paketfilter gewünscht - so dass nur spezifische, diesem Paketfilter entsprechende Pakete über diese Verbindung gesendet werden - erfolgt dessen Einrichtung wie unter C2 Schritt 6 beschrieben.
11. Modifikationen der nun eingerichteten Verbindung hinsichtlich der Dienstgüte können wie unter B beschrieben erfolgen.

### C2) Aufbau weiterer Verbindungen durch das UE

Dies kann identisch ablaufen wie der Aufbau der ersten Verbindung. Alternativ kann aber auch eine bereits bestehende Verbindung zur Anforderung der neuen Verbindung genutzt werden, wobei die Einbettung der Neuanforderung in Nutzdatenpakete der bestehenden Verbindung möglich ist und die erneute Authentifikation vereinfacht oder vermieden werden kann. Der Ablauf ist dann wie folgt.
1. Das UE fordert vom RAN über den bekannten Weg Ressourcen für die neue Funkverbindung an, wobei die Funkverbindungsparameter, das entsprechende TCL und ein neuer RFI ermittelt werden.
2. Das RAN fügt im Uplink einer bestehenden Verbindung das gewünschte TCL und den wie in C1, Schritt 3, festgelegten CFI in eine oder mehrere Pakete ein. Sofern zu diesem Zeitpunkt keine Nutzerdaten für die Verbindung vorliegen, können alternativ auf der Verbindung leere Pakete, mit dem neuen TCL markiert, gesendet werden.
3. Die bereits beschriebenen Prozeduren im CN laufen ab und das CN sendet den endgültigen TCL und CFI im Downlink:
   a) Eingebettet in ein - ggf. leeres - Paket einer bestehenden Verbindung;
   b) Wie in C1 Schritt 5 beschrieben, also bereits als neue Verbindung.
4. Soweit erforderlich, erfolgt noch eine Anpassung der Funkverbindung zwischen RAN und UE. Die neue Verbindung ist damit hergestellt.
5. Auf dieser Verbindung kann das UE dieselbe IP-Adresse nutzen wie auf einer anderen Verbindung oder auch eine andere Adresse. Der Mechanismus, mit dem die zu nutzende Adresse festgelegt wird, ist nicht Bestandteil dieses Dienstgüteverfahrens.
6. Es ist auch noch festzulegen, welcher Paketfilter für diese Verbindung anzuwenden ist, damit die entsprechenden Pakete im Downlink über diese Verbindung gesendet werden. Dies wird zwischen UE und CN vereinbart mit Mechanismen außerhalb des hier beschriebenen Dienstgüteverfahrens.
7. Unabhängig von Schritt 6 könnte das UE bereits Daten auf der neuen Verbindung senden. Falls gewünscht, kann das CN diese Daten verwerfen, solange kein gültiger Paketfilter für die Verbindung vorliegt. Alternativ könnte das CN auch implizit aus den Uplinkpaketen die Konfiguration für den (Downlink-)Paketfilter herleiten, einschließlich der evtl. neuen IP-Adresse der UE für diese Verbindung.
8. Die Dienstgüte der neuen Verbindung kann jederzeit mit den unter B beschriebenen Verfahren geändert werden. Eine Änderung könnte hierbei auch dadurch veranlasst werden, dass die Verbindung nicht entsprechend der vereinbarten Dienstgüte benutzt wird oder dass nach einer gewissen Zeit immer noch kein Paketfilter eingerichtet wurde.

### C3) Aufbau der ersten Verbindung durch das CN

Das CN kann diese Prozedur veranlassen, z.B. wenn die IP-Adresse des UE festgelegt wurde oder wenn ein an die IP-Adresse des UE gerichtetes Paket eintrifft und noch keine Verbindung besteht. DerAblauf hierzu ist analog zu C1 in entsprechend umgekehrter Reihenfolge.

Das CN kann auch dann den Aufbau einer neuen Verbindung wie hier beschrieben einleiten, wenn ein Paket für ein UE eintrifft, für das die bestehenden Verbindungen zu diesem UE keinen passenden Paketfilter aufweisen. Alternativ ist auch die Änderung des Paketfilters einer bestehenden Verbindung zu diesem UE möglich. Im Gegensatz zum Verbindungsaufbau ist die Aushandlung des Paketfilters zwischen CN und UE nicht Bestandteil des hier präsentierten Dienstgüteverfahrens.

### C4) Aufbau weiterer Verbindungen durch das CN

Das CN kann diese Prozedur veranlassen, z.B. wenn Pakete für ein UE ankommen und keine hinsichtlich der Dienstgüte passende Verbindung zum UE besteht. Anstelle der Modifikation einer bestehenden Verbindung kann hier der Aufbau einer neuen Verbindung sinnvoll sein, insbesondere wenn die darüber zu übertragenden Pakete sinnvoll mittels eines Paketfilters von den anderen Paketen separierbar sind. Ebenfalls ist eine Veranlassung, die neue Verbindung aufzubauen, durch Kommunikation des CN mit externen Entscheidungs- oder Diensteknoten möglich.

Der Ablauf hierzu ist analog zu C2 in entsprechend umgekehrter Reihenfolge.

### D) Beenden einer bestehenden Verbindung

Dies kann vom UE, vom RAN oder vom CN veranlasst werden, ggf. auch aufgrund von Signalisierung mit externen Entscheidungs-/Diensteknoten. Unabhängig davon, wer den Abbau der Verbindung anstößt - UE, RAN oder CN:
erfolgt der Abbau der Funkverbindung durch Signalisierung zwischen dem RAN und dem UE;
erfolgt der Abbau der Kernnetzverbindung durch den in B beschriebenen Mechanismus, wobei das TCL auf einen speziellen Wert gesetzt wird, den RAN und CN als "Verbindungsende" interpretieren.

RAN und CN deaktivieren dann alle für die Verbindung zugewiesenen Ressourcen und Einstellungen. Ggf. muss vorher eine Signalisierung zwischen UE und CN erfolgen, z.B. zur Abmeldung/Rücksetzung des für die Verbindung gültigen Paketfilters.

Das Funkzugangsnetz RAN und das Kernnetz CN benutzen die in diesem Verfahren dargestellten Dienstgüteinformationen unabhängig voneinander und ohne Signalisierung einzelner Parameter, um die der Dienstgüte entsprechende Übertragung von Paketen im Uplink und Downlink sicher zu stellen. Dies erfolgt ausschließlich anhand von für die einzelnen TCLs konfigurierten lokalen Einstellungen. Dadurch wird eine einschneidende Reduzierung der Komplexität gegenüber dem heute üblichen Verfahren erreicht. Weitere Vereinfachungen ergeben sich durch die hier dargestellte Verknüpfung verschiedener Aufgaben miteinander oder mit bereits bestehender Datenübertragung.

Beispiele für Netze, auf die das Verfahren anwendbar ist:
Mobilfunknetze der 2. Generation, GSM, wobei das Kernnetz aus den Knoten SGSN und GGSN besteht und das RAN aus den Knoten BTS und BSC;
Mobilfunknetze der 3. Generation, UMTS, wobei das Kernnetz aus den Knoten SGSN und GGSN besteht und das RAN aus den Knoten NodeB und RNC;
Mobilfunknetze der Weiterentwicklung der 3. Generation, die in der Standardisierung in 3GPP unter den Arbeitstiteln "SAE" und "LTE" laufen. Hierbei besteht das Kernnetz aus den Knoten MME und UPE und das RAN aus den Knoten eNodeB sowie evtl. zentralen Signalisierungsknoten.

Varianten des dargestellten Verfahrens im Hinblick auf die Einbeziehung der Dienstgüte im Backbone zwischen RAN und CN und im externen Netz:
- diffserv im backbone,
- diffserv auf Gi
- dito intserv

## Patentansprüche

1. Verfahren zur Gewährleistung von Dienstgüte in paketvermitteinden Mobilfunknetzen mit einem Kernnetzwerk CN und einem Funkzugangsnetzwerk RAN, wobei die Dienstgüte einer paketorientierten Verbindung anhand von Dienstgüteinformationen bestimmt wird
das Funkzugangsnetzwerk RAN und das Kernnetzwerk CN die Dienstgüteinformationen unabhängig voneinander und ohne Signalisierung einzelner Parameter benutzen, um eine der Dienstgüte entsprechende Übertragung von Paketen in der Verbindung sicher zu stellen, wobei dies ausschließlich anhand von für einzelne Transportklassenkennungen TCL konfigurierten lokalen Einstellungen erfolgt.

2. Verfahren nach Anspruch 1, **dadurch gekennzeichnet, dass** jeweils funk- bzw. kernnetzspezifische Parameter indirekt aus einer der Transportklassenkennungen TCL abgeleitet werden, oder teilweise oder vollständig explizit in der Transportklassenkennung TCL angegeben sind, wobei im Falle einer vollständigen oder teilweisen Ableitung der funk- bzw. kernnetz spezifischen Parameter eine Herleitung aufgrund von konfigurierbaren knotenspezifischen Regeln erfolgt.

3. Verfahren nach Anspruch 1 oder 2, **dadurch gekennzeichnet, dass** das Funkzugangsnetzwerk RAN und das Kernnetzwerk CN unabhängig voneinander und ohne entsprechende Signalisierung spezifische Parameter der von ihnen verwalteten RAN-/CN-Verbindung ändern können, solange dies in den Grenzen der vorgegebenen Transportklassenkennung TCL und der damit ggf. verbundenen Ableitungsregeln erlaubt ist.

4. Verfahren nach einem der Ansprüche 1 bis 3, **dadurch gekennzeichnet, dass** im Falle bei einer bestehenden Verbindung festgestellt wird, dass die vereinbarte Dienstgüte für den über die Verbindung abgewickelten Dienst / Zweck nicht angemessen ist, oder dass früher zugewiesene /angeforderte Ressourcen nicht mehr / wieder verfügbar sind, die Änderung der Dienstgüte der Verbindung von demjenigen Knoten veranlasst wird, der den oben genannten Grund für die Änderung feststellt.

5. Verfahren nach Anspruch 4, **dadurch gekennzeichnet, dass** die Änderung der Dienstgüte vom Endgerät UE veranlasst wird.

6. Verfahren nach Anspruch 4, **dadurch gekennzeichnet, dass** die Änderung der Dienstgüte vom Funkzugangsnetzwerk RAN veranlasst wird.

7. Verfahren nach Anspruch 4, **dadurch gekennzeichnet, dass** die Änderung der Dienstgüte vom Kernnetzwerk CN veranlasst wird.

8. Vorrichtung mit Mitteln zur Durchführung des Verfahrens gemäß den vorhergehenden Ansprüchen.

## Claims

1. Method for guaranteeing service quality in packet-switching mobile telephone networks having a core network CN and a radio access network RAN, wherein the service quality of a packet-orientated connection is determined using service quality information and wherein the radio access network RAN and the core network CN use the service quality information independently of one another and without signalling of individual parameters in order to ensure transfer of packets corresponding to the service quality in the connection, wherein this is effected only using local settings which are configured for individual transport class labels TCL.

2. Method according to claim 1, **characterised in that** in each case radio network-specific or core network-specific parameters are derived indirectly from one of the transport class labels TCL, or are indicated partly or completely explicitly in the transport class label TCL, wherein in the case of complete or partial derivation of the radio network-specific or core network-specific parameters, a derivation is effected on the basis of configurable node-specific rules.

3. Method according to claim 1 or 2, **characterised in that** the radio access network RAN and the core network CN independently of one another and without corresponding signalling may change specific parameters of the RAN/CN connection administered by them as long as this is permitted within the limits of the preset transport class label TCL and the derivation rules optionally associated therewith.

4. Method according to one of claims 1 to 3, **characterised in that** if in the case of an existing connection it is established that the agreed service quality is not appropriate for the service/purpose carried out via the connection, or that previously allocated/requested resources are no longer available/continue to be available, the change of service quality of the connection is prompted by that node which establishes the above-mentioned reason for the change.

5. Method according to claim 4, **characterised in that** the change in service quality is prompted by the terminal UE.

6. Method according to claim 4, **characterised in that** the change in service quality is prompted by the radio access network RAN.

7. Method according to claim 4, **characterised in that** the change in service quality is prompted by the core network CN.

8. Device having means for carrying out the method according to the preceding claims.

## Revendications

1. Procédé pour garantir une qualité de service dans des réseaux de radiocommunication mobile à commutation par paquets avec un réseau central CN et un réseau d'accès radio RAN, la qualité de service d'une liaison par paquets étant définie à l'aide d'informations de qualité de service, et le réseau d'accès radio RAN et le réseau central CN utilisant les informations de qualité de service indépendamment l'un de l'autre et sans signalisation de paramètres individuels, afin d'assurer une transmission de paquets, dans la liaison, qui corresponde à la qualité de service, cela se faisant exclusivement à l'aide de réglages locaux configurés pour des identifications de classes de transport TCL individuelles.

2. Procédé selon la revendication 1, **caractérisé en ce que** des paramètres propres au réseau radio ou au réseau central sont dérivés indirectement de l'une des identifications de classes de transport TCL ou sont indiquées partiellement ou entièrement explicitement dans l'identification de classe de transport TCL, étant précisé que dans le cas d'une dérivation complète ou partielle des paramètres propres au réseau radio ou au réseau central, une dérivation a lieu sur la base de règles configurables propres au noeud.

3. Procédé selon la revendication 1 ou 2, **caractérisé en ce que** le réseau d'accès radio RAN et le réseau central CN peuvent modifier indépendamment l'un de l'autre et sans signalisation correspondante, des paramètres spécifiques de la liaison RAN/CN qu'ils gèrent, tant que cela est permis dans les limites de la TCL prédéfinie et des règles de dérivation éventuellement liées à celle-ci.

4. Procédé selon l'une des revendications 1 à 3, **caractérisé en ce que** dans le cas où il est constaté, pour une liaison existante, que la qualité de service convenue n'est pas appropriée pour le service/l'objectif réalisé par l'intermédiaire de la liaison ou que des ressources précédemment affectées/demandées ne sont plus/sont à nouveau disponibles, la modification de la qualité de service de liaison est déclenchée par le noeud qui constate la raison susmentionnée de la modification.

5. Procédé selon la revendication 4, **caractérisé en ce que** la modification de la qualité de service est déclenchée par le terminal UE.

6. Procédé selon la revendication 4, **caractérisé en ce que** la modification de la qualité de service est déclenchée par le réseau d'accès radio RAN.

7. Procédé selon la revendication 4, **caractérisé en ce que** la modification de la qualité de service est déclenchée par le réseau central CN.

8. Dispositif avec des moyens pour mettre en oeuvre le procédé selon les revendications précédentes.
